(19) **Europäisches Patentamt / European Patent Office / Office européen des brevets**

(11) **EP 4 454 235 B1**

(12) **EUROPEAN PATENT SPECIFICATION**

(45) Date of publication and mention
of the grant of the patent:
**09.07.2025 Bulletin 2025/28**

(21) Application number: **22757897.8**

(22) Date of filing: **26.07.2022**

(51) International Patent Classification (IPC):
*H04L 41/16* (2022.01)     *H04L 43/08* (2022.01)
*G06N 3/0455* (2023.01)    *G06N 3/092* (2023.01)
*G06N 3/0475* (2023.01)    *G06N 7/01* (2023.01)

(52) Cooperative Patent Classification (CPC):
**H04L 41/16; H04L 43/08; G06N 3/0455;
G06N 3/0475; G06N 3/092; G06N 7/01**

(86) International application number:
**PCT/EP2022/070979**

(87) International publication number:
**WO 2023/011992 (09.02.2023 Gazette 2023/06)**

(54) **ORCHESTRATING ACQUISITION OF TRAINING DATA**

ORCHESTRIERUNG DER ERFASSUNG VON TRAININGSDATEN

ORCHESTRATION D'ACQUISITION DE DONNÉES D'ENTRAÎNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2021 GR 20210100904**

(43) Date of publication of application:
**30.10.2024 Bulletin 2024/44**

(73) Proprietor: **Telefonaktiebolaget LM Ericsson
(publ)
164 83 Stockholm (SE)**

(72) Inventors:
 • **OLSSON, Hjalmar**
   **168 63 BROMMA (SE)**
 • **VANDIKAS, Konstantinos**
   **169 73 SOLNA (SE)**
 • **ALABBASI, Abdulrahman**
   **164 44 KISTA (SE)**
 • **SANDERS, Erik**
   **186 53 VALLENTUNA (SE)**
 • **BERGGREN, Karl Viktor**
   **191 45 SOLLENTUNA (SE)**
 • **SHOKRI GHADIKOLAEI, Hossein**
   **171 52 SOLNA (SE)**

(74) Representative: **Ericsson
Patent Development
Torshamnsgatan 21-23
164 80 Stockholm (SE)**

(56) References cited:
 **WO-A1-2020/139179     US-A1- 2021 201 208**

 • **KALOXYLOS ALEXANDROS ET AL: "AI and ML -
   Enablers for Beyond 5G Networks", 1 December
   2020 (2020-12-01), XP055906766, Retrieved from
   the Internet <URL:https://5g-ppp.eu/wp-content/
   uploads/2021/05/AI-MLforNetworks-v1-0.pdf>
   [retrieved on 20220329], DOI: 10.5281/
   zenodo.4299895**
 • **"Next Generation Protocols (NGP); Intelligence-
   Defined Network (IDN)", vol. NGP, no. V1.1.1, 15
   June 2018 (2018-06-15), pages 1 - 35,
   XP014319174, Retrieved from the Internet
   <URL:http://www.etsi.org/deliver/etsi_gr/NGP/
   001_099/006/01.01.01_60/gr_NGP006v010101p.
   pdf> [retrieved on 20180615]**

EP 4 454 235 B1

**Description**

<u>Technical Field</u>

The present disclosure relates to a method for orchestrating acquisition of a quantity of communication network data for training a target Machine Learning model for use by a communication network node. The method may be performed by an orchestration node. The present disclosure also relates to an orchestration node, and to a computer program product configured, when run on a computer, to carry out a method for orchestrating acquisition of a quantity of communication network data.

<u>Background</u>

In the Third Generation Partnership Project (3GPP), Artificial Intelligence (AI) and Machine Learning (ML) use cases are being introduced, which leverage ML algorithms in order to improve the behaviour of communication networks. AI/ML for traffic steering is one example of the use cases being introduced, and may encompass: capacity improvements and increased energy efficiency, quality of service (QoS) prediction, and improved radio resource management (RRM).

AI/ML use cases are poised to bring significant improvements in the manner that communication networks operate. However, in order to properly implement such use cases, and to experience the benefits they may bring, it is necessary to collect large volumes of data. This data is required to train the relevant AI/ML models to be able to capture, in an accurate manner, valid associations between data inputs and output target variables, and to sustain a reasonable performance of AI/ML techniques over time.

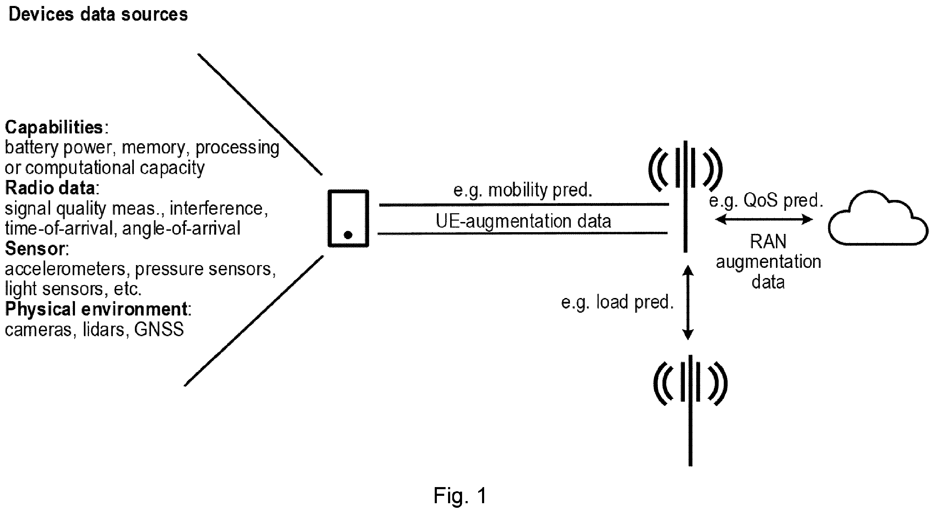

Figure 1 is a schematic illustration of information that may potentially be collected by wireless devices (UEs) in a communication network in order to support AI/ML use cases. Collection and transfer of data as illustrated in Figure 1, and as required for the training of AI/ML models, can be problematic for several reasons. In particular, transferring the volume of data that is needed to implement useful AI/ML techniques can come at the expense of using communication network bandwidth which would otherwise be reserved to transport information needed for the regular operation of the network. For example, the network bandwidth required to transfer useful data may already be used by a user equipment (UE) of the network for regular operation of the network (control plane messaging) and/or user plane traffic.

An additional difficulty arises when considering data which are relevant for an AI/ML use case, and which include information which may be sensitive or subject to privacy restrictions. For example, it may not be appropriate, or even possible, from a legislative or regulatory perspective, to copy and/or transfer certain types of data outside of a UE or from other sources of sensitive data.

In some existing techniques, the processing of relevant data and/or information may take place at a data center which is located outside of the country where the relevant data is collected. This can be problematic, as certain countries may restrict the movement of such data beyond their geographical borders.

Generative models, such as variational autoencoders, conditional autoencoders, and generative adversarial networks, can assist with some of the above mentioned challenges. Generative models are designed to learn a data distribution $(\mu, \sigma)$ of a dataset and then generate new data based on the learned data distribution. However, it can be difficult to decide how and when generative model techniques should be implemented to generate new data for AI/ML training. In particular, although real data (e.g. data not generated by a generative model) is generally preferred for training an ML model, the resource cost associated with obtaining and transferring such real data can be prohibitively high. On the other hand, generating data using a generative model can require a significant amount of computational resources which may not always be available when needed. In addition, it is not necessary to use privacy aware techniques for every feature to be collected, and privacy requirements are subject to change over time and/or from one country to another.

Throttling is another technique which may be used to reduce the volume of data that is transferred in a network. Throttling techniques can include, for example, capping data traffic at a particular limit once a threshold is exceeded. However, throttling techniques do not reduce the total amount of data that is transferred in the network, but instead act to lower the data transfer rate in order to make the data load more tolerable for available consumers and/or resources in the network.

US 2021/201208 A1 discloses using results of a simulation performed using a gradually trained machine learning model to determine an amount of training data sufficient to train other machine learning models.

Data acquisition for the purposes of training an ML model for use in a communication network consequently remains an open challenge, with existing techniques all suffering from one or more disadvantages with respect either to the quality of the training provided to the ML model or to the stable functioning of the network.

<u>Summary</u>

It is an aim of the present disclosure to provide a method, an orchestration node, and a computer readable medium which at least partially address one or more of the challenges discussed above.

According to a first aspect of the present disclosure there is provided a method for orchestrating acquisition of a quantity of communication network data for training a target Machine Learning (ML) model for use by a communication network node. The method is performed by an orchestration node. The method comprises obtaining a representation of a data acquisition state for the communication network data. The method further comprises using an orchestration ML model to map the representation of the data acquisition state to a first amount of the communication network data to be collected from sources of the communication network data, and a remaining amount of the communication network data to be generated using a generative model. The method further comprises causing at least the first amount of the communication network data to be collected from sources of the communication network data. The method further comprises, when the collected communication network data fulfils an availability criterion for training of a generative model, causing a generative model for the communication network data to be trained using the collected communication network data. The method further comprises causing the remaining amount of the communication network data to be generated using the trained generative model. The method further comprises causing the quantity of communication network data, comprising the first amount of collected data and the remaining amount of generated data, to be provided to the communication network node for training of the target ML model. A representation of a data acquisition state for the communication network data comprises: a number of target ML models to be trained using the dataset; availability of resources for collection of the communication network data from data sources; and a cost of resources for generating the communication network data.

According to another aspect of the present disclosure, there is provided a computer program product comprising a computer readable medium, the computer readable medium having computer readable code embodied therein, the computer readable code being configured such that, on execution by a suitable computer or processor, the computer or processor is caused to perform a method according to any one of the aspects or examples of the present disclosure.

According to another aspect of the present disclosure, there is provided an orchestration node for orchestrating acquisition of a quantity of communication network data for training a target ML model for use by a communication network node. The orchestration node comprises processing circuitry configured to cause the orchestration node to obtain a representation of a data acquisition state for the communication network data. The processing circuitry is further configured to use an orchestration ML model to map the representation of the data acquisition state to a first amount of the communication network data to be collected from sources of the communication network data, and a remaining amount of the communication network data to be generated using a generative model. The processing circuitry is further configured to cause at least the first amount of the communication network data to be collected from sources of the communication network data. The processing circuitry is further configured to, when the collected communication network data fulfils an availability criterion for training of a generative model, cause a generative model for the communication network data to be trained using the collected communication network data. The processing circuitry is further configured to cause the remaining amount of the communication network data to be generated using the trained generative model. The processing circuitry is further configured to cause the communication network data, comprising the first amount of collected data and the remaining amount of generated data, to be provided to the communication network node for training of the target ML model. A representation of a data acquisition state for the communication network data comprises: a number of target ML models to be trained using the dataset; a cost of resources for collection of the communication network data from data sources; and a cost of resources for generating the communication network data.

Aspects and examples of the present disclosure thus provide a method, an orchestration node, and a computer readable medium to orchestrate the acquisition of a quantity of communication network data for training a target ML model for use by a communication network node. In particular, an orchestration ML model may be used to determine an amount of the communication network data to be collected from sources of the communication network data, and a remaining amount of the communication network data to be generated using a generative model. In this way, the aspects and examples of the present disclosure provide a technique for determining an optimal split, between collected data and generated data, for acquiring the quantity of communication network data for training a target ML model.

For the purposes of the present disclosure, the term "ML model" encompasses within its scope the following concepts:

Machine Learning algorithms, comprising processes or instructions through which data may be used in a training process to generate a model artefact for performing a given task, or for representing a real world process or system; the model artefact that is created by such a training process, and which comprises the computational architecture that performs the task; and

the process performed by the model artefact in order to complete the task. References to "ML model", "model", model parameters", "model information", etc., may thus be understood as relating to any one or more of the above concepts encompassed within the scope of "ML model".

Brief Description of the Drawings

For a better understanding of the present disclosure, and to show more clearly how it may be carried into effect, reference will now be made, by way of example, to the following drawings in which:

Figure 1 is a schematic illustration of data collection in a communication network;

Figure 2 is a flow chart illustrating process steps in a method for orchestrating acquisition of data;

Figures 3a to 3f show a flow chart illustrating process steps in another example of a method for orchestrating acquisition of data;

Figures 4 and 5 are block diagrams illustrating functional modules in examples of an orchestration node;

Figure 6 shows an example signalling exchange; and

Figure 7 shows another example signalling exchange.

Detailed Description

Examples of the present disclose thus propose an orchestration node that may be privacy-aware, and which monitors factors such as network footprint and availability of computational resources to orchestrate collection of data from various data sources (such as UEs) as well as generation of data. The node may use optimization techniques (such as Reinforcement Learning) to determine an optimal "split" between collecting communication network data from sources of the data, and generating synthetic data, given factors such as available bandwidth and available computational resources.

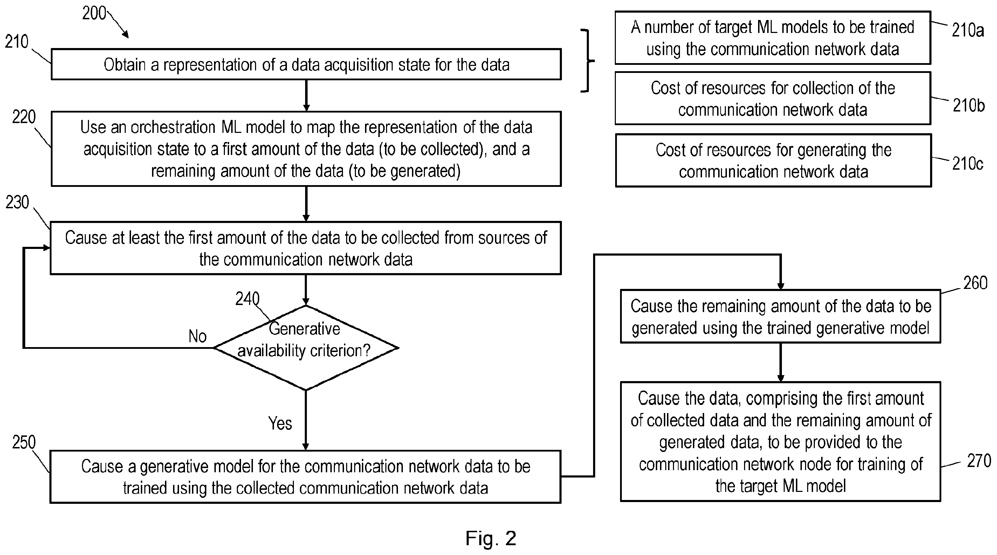

Figure 2 is a flow chart illustrating process steps in a computer implemented method 200 for orchestrating acquisition of a quantity of communication network data for training a target Machine Learning (ML) model for use by a communication network node. The quantity of communication network data may for example comprise a dataset, or may comprise a stream or a batch of data. The communication network data may be data gathered by communication network nodes or available to communication network nodes, for example having been acquired by communication network nodes or being locally available to the communication network nodes. Such data may comprise data from the communication network, such as performance or other operational data, or may comprise data relating to a service or operation external to the communication network, but which is collected and/or stored by communication network nodes, including for example monitoring data such as environment or machine/equipment sensor data.
The method 200 is performed by an orchestration node, which may comprise a physical or virtual node, and may be implemented in a computing device, server apparatus and/or in a virtualized environment, for example in a cloud, edge cloud or fog deployment. The orchestration node may comprise or be instantiated in any part of a network, for example in a logical core network node of a communication network, network management centre, network operations centre, radio access network node etc. A radio access network node may comprise a base station, eNodeB, gNodeB, or any other current or future implementation of functionality facilitating the exchange of radio network signals between nodes and/or users of a communication network. Any communication network node may itself be divided between several logical and/or physical functions, and any one or more parts of the orchestration node may be instantiated in one or more logical or physical functions of a communication network node. The orchestration node may therefore encompass multiple logical entities, as discussed in greater detail below.
Referring to Figure 2, in step 210 the method 200 comprises obtaining a representation of a data acquisition state for the communication network data. The data acquisition state for the communication network data comprises the current situation of the communication network with regard to the acquisition of the communication network data. This state may be described by multiple parameters, quantifying different aspects of the current situation with regard to acquisition of this particular data. These parameters may include for example demand for acquisition of the data (for example some representation of the quantity of tasks for which the data is required, the number of entities requesting the data etc.), and the current cost to the communication network of acquiring the data. Current cost may include the availability of sources of the data, availability of resources for acquiring the data, some quantification of the relative importance of other tasks for which such resources may be needed, etc. The data acquisition state for the communication network data may thus be characterized by a wide range of parameters. A representation of the data acquisition state comprises values of at least some of these parameters. The representation may for example comprise a vector, matrix, or other tensor of values for one or more parameters that characterize the current situation with regard to acquisition of the communication network data.
As illustrated at 210a, 210b and 210c, for the purposes of the method 200, the representation of a data acquisition state for the communication network data comprises a number of target ML models to be trained using the communication network data; a cost of resources for collection of the communication network data from data sources; and a cost of resources for generating the communication network data. The cost of resources for collection and generation of the communication network data may encompass the availability of such resources (for example, if no resources are available the cost may be infinitely or prohibitively high), as well as priority of the task of data acquisition. For example, if resources are available but other high priority or higher value tasks also require those resources, then the cost may be increased. A value for the number of target ML models to be trained using the communication network data, and values or vectors of values representing the cost of resources for collection and generation of the communication network data may be assembled into a matrix that comprises the obtained representation of the data acquisition state for the communication network data. In step 220, the method 200 comprises using an orchestration ML model to map the representation of the data acquisition state to a first amount of the communication network data to be collected from sources of the communication network data, and a remaining amount of the communication network data to be generated using a generative model. In this context, mapping refers to the use of the orchestration ML model to transform the representation of the data acquisition state to the first and remaining amounts. As discussed in further detail below, this may for example comprise submitting the representation of the data acquisition state to the orchestration ML model as model input data, allowing the orchestration ML model to process this input data in accordance with current values of its model parameters, and obtaining from the orchestration ML model a model output, which may for example comprise a value for either or both of the first and remaining amounts. If only one of the first or remaining amount is output by the model, then the other of the first and remaining amount may be obtained by subtracting the model output form the total amount of data. In step 230, the method 200 comprises causing at least the first amount of the communication network data to be collected from sources of the communication network data.

As illustrated at step 240, the method 200 then comprises identifying whether the collected communication network data fulfils an availability criterion for training of a generative model. As also illustrated at step 240, if the collected communication network data does not fulfil the availability criterion, the method 200 may return to step 230. As further illustrated at step 240, if the collected communication network data does fulfil the availability criterion, the method 200 proceeds to step 250. In step 250, the method 200 comprises causing a generative model for the communication network data to be trained using the collected communication network data. In step 260, the method 200 comprises causing the remaining amount of the communication network data to be generated using the trained generative model. In step 270, the method comprises causing the quantity of communication network data, comprising the first amount of collected data and the remaining amount of generated data, to be provided to the communication network node for training of the target ML model

It will be appreciated that the method 200 may be carried out during a learning phase, an operational phase, and/or may encompass elements of learning during online operation. For example, the step of using the orchestration ML model to map the representation to amounts of the dataset to be collected and to be generated may comprise using the output of the ML model directly, or using a randomization process to balance exploitation (using the model output directly) and exploration of the state action space. The method 200 takes account of the amount of data to be acquired and the cost of resources for data collection and for data generation in order to determine an optimal split between data to be collected and data to be generated.

It will further be appreciated that collection of "at least" the first amount of communication network data may encompass collecting greater than the first amount of data, for example the first amount determined by the orchestration ML model is not actually enough to train a generative model. This might be the case for example if the ML model outputs a first amount corresponding to a very small percentage of the data to be collected, with the majority to be generated. This small percentage may not be sufficient, or sufficiently diverse etc., to train the generative model.

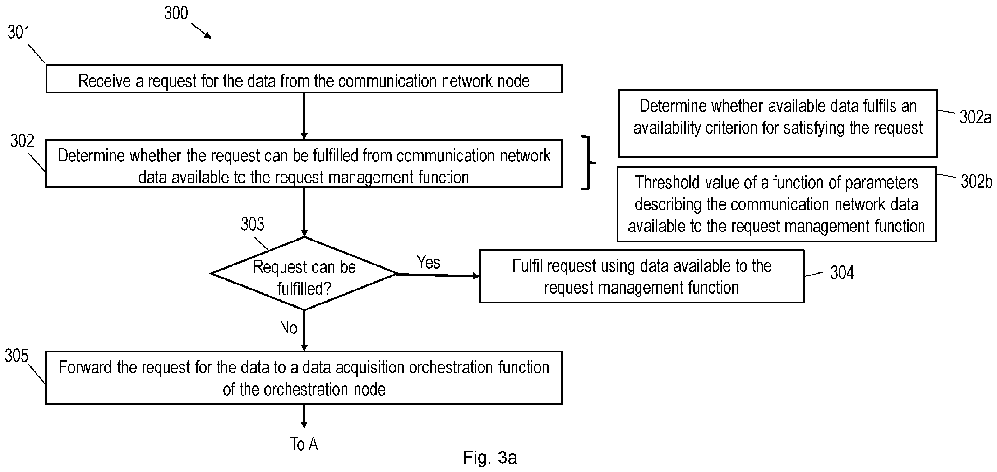

Figures 3a to 3f show a flow chart illustrating process steps in another example of a method 300 for orchestrating acquisition of a quantity of communication network data for training a target Machine Learning (ML) model for use by a communication network node. The method 300 provides various examples of how the steps of the method 200 may be implemented and supplemented to achieve the above discussed and additional functionality. The method 300 may be performed by a request management function and an orchestration function of the orchestration node that performs the method 200. The request management function may in some examples comprise a data catalogue.

Referring first to Figure 3a, in a first step 301, the request management function of the orchestration node may receive a request for the communication network data from the communication node. In step 302, the request management function of the orchestration node may determine whether the request can be fulfilled from communication network data available to the request management function. As illustrated at 302a, determining whether the request can be fulfilled from communication network data available to the request management function may comprise determining whether communication network data available to the request management function fulfils an availability criterion for satisfying the request. In certain examples, as illustrated at 302b, the availability criterion for satisfying the request comprises a threshold value of a function of parameters describing the communication network data available to the request management function. These parameters may include at least one of:

a proportion of the data that was collected from data sources and a proportion of the data that was generated using a generative model;

a performance measure for at least one ML model trained using the data;

a validity of the data with respect to communication network changes;

a quantity of the data;

a statistical property of the data;

satisfaction of requirements for the communication network data;

stability of the data;

a measure of drift within the data;

a measure of robustness of the data; and

a measure of importance of the data with respect to the communication network data.

As illustrated at step 303, the request management function of the orchestration node may determine whether the request can be fulfilled from communication network data available to the request management function. As illustrated at step 304, if the request can be fulfilled from communication network data available to the request management function, the request management function of the orchestration node may fulfil the request using data available to the request management function. As illustrated at step 305, if the request cannot be fulfilled from communication network data available to the request management function, the request management function of the orchestration node may forward the request for the communication network data to a data acquisition orchestration function of the orchestration node. The remaining steps of the method 300 may be performed by the data acquisition orchestration function of the orchestration node. For brevity, the term "orchestration node" is used below to refer to the logical entity conducting the remaining method steps of the method 300. However, it will be appreciated that the remaining method steps may in fact be performed specifically by the data acquisition orchestration function of the orchestration node.

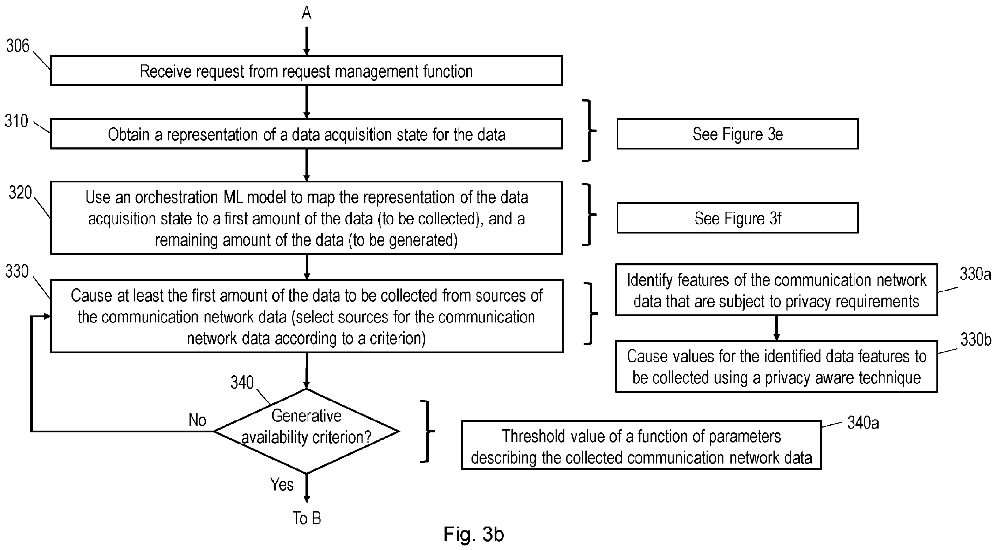

As illustrated in Figure 3b, in a first step 306, the orchestration node may receive a request from the request management function. In step 310, the orchestration node may obtain a representation of a data acquisition state for the communication network data.

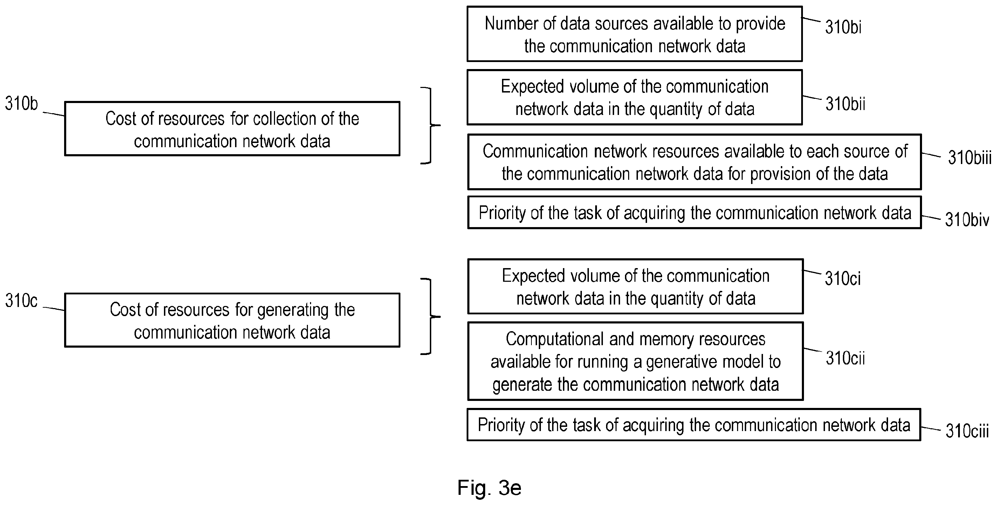

Sub steps that may be carried out by the orchestration node in order to perform step 310 are illustrated in Figure 3e.

Referring now to Figure 3e, as illustrated at 310b, a cost of resources for collection of the communication network data from data sources may comprise: a number of data sources available to provide the communication network data (as illustrated at 310bi); an expected volume of the communication network data in the quantity of communication network data to be acquired (as illustrated at 310bii); communication network resources available to each source of the communication network data for provision of the communication network data (as illustrated at 310biii); and/or a priority of the task of acquiring the communication network data (as illustrated at 310biv). Communication network resources available to each source of the communication network data for provision of the communication network data could be represented or analysed as sufficient latency, throughput and/or other network related KPIs (absence of packet loss etc). As illustrated at 310c, a cost of resources for generating the communication network data may comprise: an expected volume of the communication network data in the quantity of communication network data to be acquired (as illustrated at 310ci); computational and memory resources available for running a generative model to generate the communication network data (as illustrated at 310cii), and/or a priority of the task of acquiring the communication network data (as illustrated at 310ciii). The cost of resources, as discussed above, may thus encompass both their availability and implications for the communication network of allocating such resources to the task of acquiring communication network data for this purpose, as opposed to allocating the resources to other tasks that may also be seeking access to the resources.

Referring again to Figure 3b, and having obtained the representation of a data acquisition state for the communication network data at step 310, in step 320 the orchestration node uses an orchestration ML model to map the representation of the data acquisition state to a first amount of the communication network data to be collected from sources of the communication network data, and a remaining amount of the communication network data to be generated using a generative model. A variety of different ML model types and architectures may be suitable for the orchestration ML model, as discussed in greater detail below with reference to implementation of the methods 200, 300.

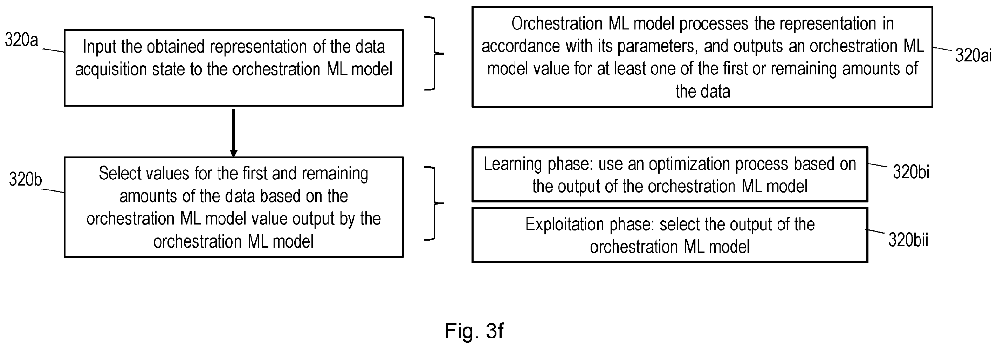

Sub steps that may be carried out by the orchestration node in order to perform step 320 are illustrated in Figure 3f.

Referring now to Figure 3f, in step 320a the orchestration node may input the obtained representation of the data acquisition state to the orchestration ML model. As illustrated at 320ai, the orchestration ML model may process the representation in accordance with its parameters, and can output an orchestration ML model value for at least one of the first or remaining amounts of the communication network data. In step 320b, the orchestration node may select values for the first and remaining amounts of the communication network data based on the orchestration ML model value output by the orchestration ML model.

As discussed above, the method 300 may be carried out during a learning phase and/or during an operational phase. As illustrated at 320bi, during a learning phase, selecting values for the first and remaining amounts of the communication network data based on the orchestration ML model value output by the orchestration ML model may comprise using a randomisation process to balance selection of a random value for at least one of the first and remaining amounts with selection of the orchestration ML model value for at least one of the first and remaining amounts. In this manner, exploitation of the knowledge embodied in the orchestration ML model may be balanced with the advantages to be gained from exploration of the state-action space represented by the possible data acquisition states and the possible splits between data to be collected and data to be generated. It will be appreciated that any proper randomization algorithm that balances the exploration and exploitation could be used in this step, including for example an epsilon-greedy algorithm, or Deep Q Networks. In the case of epsilon-greedy, the orchestration node may select a random value for at least one of the first and remaining amounts with a probability of epsilon, and to select the orchestration ML model value for at least one of the first and remaining amounts with a probability of one minus epsilon. The value of epsilon may be set and adjusted according to relative priorities for selecting an optimal action (according to current experience) and building a diverse and useful experience buffer for training the orchestration ML model, as discussed in greater detail below.

As illustrated at 320bii, during an exploitation phase, selecting values for the first and remaining amounts of the communication network data based on the orchestration ML model value output by the orchestration ML model may comprise selecting the orchestration ML model value for at least one of the first and remaining amounts.

Referring again to Figure 3b, and having mapped the representation of the data acquisition state at step 320, in step 330 the orchestration node causes at least the first amount of the communication network data to be collected from sources of the communication network data. As illustrated at step 330, the orchestration node may select sources collection of the communication network data according to a selection criterion. The selection criterion may relate to specific features required for the data, including for example data sources that are located in a particular position, etc. A full discussion of features that may be taken into account in the selection criterion is provided below with reference to implementation of the methods 200 and 300. As illustrated at 330a, causing at least the first amount of the communication network data to be collected from sources of the communication network data may comprise identifying features of the communication network data that are subject to privacy requirements. As illustrated at 330b, causing at least the first amount of the communication network data to be collected from sources of the communication network data may comprise, for identified data features, causing values for the identified data features to be collected using a privacy aware technique. Examples of such techniques include differential privacy, secure aggregation, and other secure multi-party computation techniques.

In step 340, the orchestration node may identify whether the collected communication network data fulfils an availability criterion for training of a generative model. As illustrated at 340a, the availability criterion for training of a generative model can comprise a threshold value of a function of parameters describing the collected communication network data. These parameters can include at least one of:

> a quantity of the data;
> a statistical property of the data;
> satisfaction of requirements for the communication network data;
> stability of the data;
> a measure of drift within the data;
> a measure of robustness of the data; and
> a measure of importance of the data with respect to the communication network data.

It will be appreciated that the method 300 refers to two availability criteria: the availability criterion for satisfying a request, discussed with reference to step 302a, and the availability criterion for training of a generative model. The availability criterion for satisfying a request is used to determine whether a received data request can be fulfilled from data that is already available, for example being stored in a memory that is accessible to the request management function. The availability criterion for training of a generative model is used to determine whether enough data has been collected to train a generative model. Many of the same parameters are included in both criteria, but the criterion for determining whether a request can be fulfilled also takes account of whether the available data is synthetic (i.e., generated) or collected, whether the network has undergone changes since the data was collected or generated, and performance of models previously trained using the data.

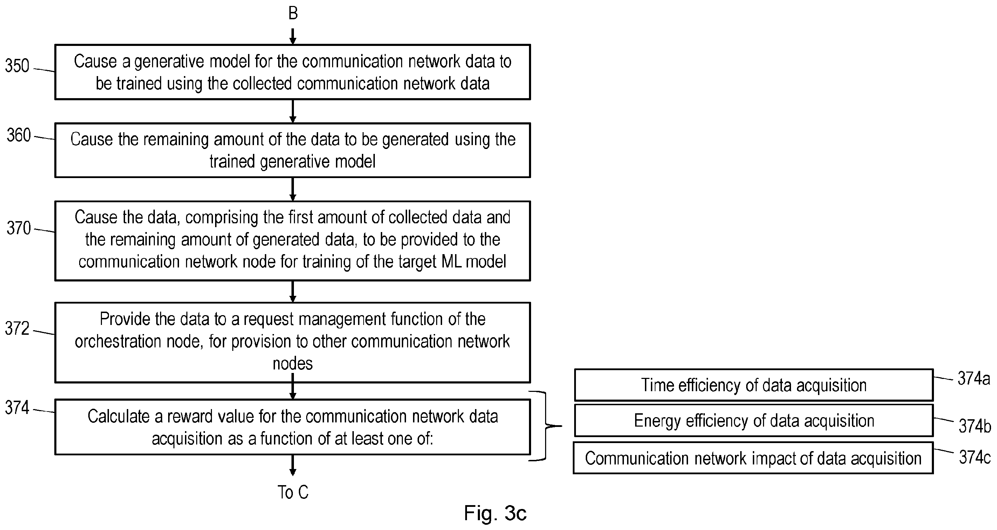

As illustrated at step 340, if the orchestration node identifies that the collected communication network data does not fulfil the availability criterion for training of a generative model, the method may proceed back to step 330. Alternatively, if the orchestration node identifies that the collected communication network data does fulfil the availability criterion for training of a generative model, the method may proceed to step 350, as illustrated in Figure 3c.

In particular, as illustrated in Figure 3c, in step 350 the orchestration node may cause a generative model for the communication network data to be trained using the collected communication network data. In step 360, the orchestration node may cause the remaining amount of the communication network data to be generated using the trained generative model. In step 370, the orchestration node may cause the quantity of communication network data, comprising the first amount of collected data and the remaining amount of generated data, to be provided to the communication network node for training of the target ML model. In step 372, the orchestration model may provide the quantity of communication network data to a request management function of the orchestration node, for provision to other communication network nodes. In step 374, the orchestration node may calculate a reward value for the communication network data acquisition. As illustrated at 374a, 374b and 374c, the reward value calculated at step 374 may be calculated as a function of at least one of: time efficiency of communication network data acquisition; energy efficiency of communication network data acquisition; communication network impact of communication network data acquisition, respectively.

Time efficiency may be a function of a time taken to collect at least the first amount of communication network data from sources of the communication network data, and a time taken to generate the remaining amount of the communication network data, where time to collect data includes time to measure, assemble and upload. Energy efficiency may be a function of energy consumption for transmission of collected data and energy consumption for generation of data. Communication network impact may be a function of transmission interference caused by transmission of collected data, and processing interference caused by generation of data.

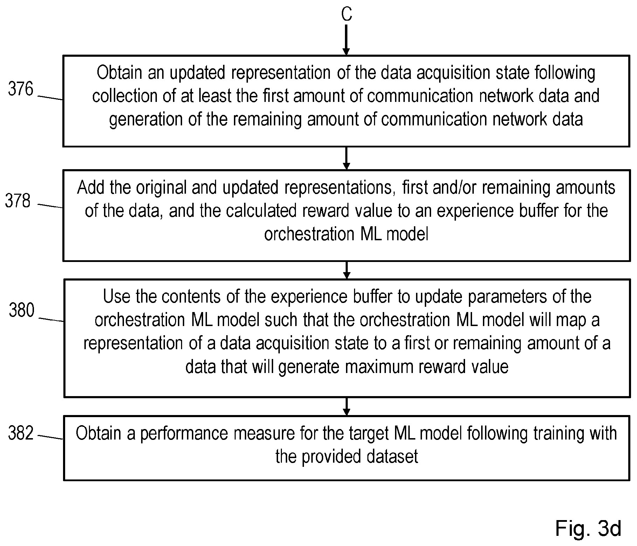

As illustrated in Figure 3d, in step 376, the orchestration node may obtain an updated representation of the data acquisition state following collection of at least the first amount of communication network data and generation of the remaining amount of communication network data. In step 378, the orchestration node may add the obtained representation of the data acquisition state for the communication network data; the obtained updated representation of the data acquisition state for the communication network data; at least one of the first or remaining amounts of the communication network data; and the calculated reward value to an experience buffer for the orchestration ML model. In step 380, the orchestration node may use the contents of the experience buffer to update parameters of the orchestration ML model such that the orchestration ML model will map a representation of a data acquisition state to a first or remaining amount of a communication network data that will generate maximum reward value. An example of this updating may include inputting representations from the experience buffer to the orchestration ML model, wherein the orchestration ML model processes the representations in accordance with current values of its trainable parameters and outputs an orchestration ML model value for the first or remaining amount, and updating the values of the trainable parameters so as to minimise a loss function based on a difference between the reward associated with the ML model value and a maximum available reward. In step 382, the orchestration node may obtain a performance measure for the target ML model following training with the provided communication network data.

As discussed above, the methods 200 and 300 may be performed by an orchestration node, and the present disclosure provides an orchestration node that is adapted to perform any or all of the steps of the above discussed methods. The orchestration node may be a physical or virtual node, and may for example comprise a virtualised function that is running in a cloud, edge cloud or fog deployment. The orchestration node may for example comprise or be instantiated in any part of a logical core network node, network management centre, network operations centre, radio access node, etc. Any such communication network node may itself be divided between several logical and/or physical functions.

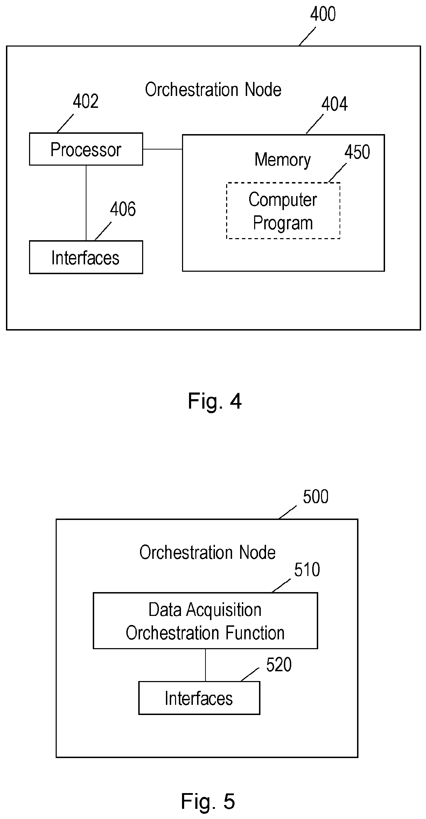

Figure 4 is a block diagram illustrating an example orchestration node 400 which may implement the method 200 and/or 300, as illustrated in Figures 2 to 3f, according to examples of the present disclosure, for example on receipt of suitable instructions from a computer program 450. Referring to Figure 4, the orchestration node 400 comprises a processor or processing circuitry 402, and may comprise a memory 404 and interfaces 406. The processing circuitry 402 is operable to perform some or all of the steps of the method 200 and/or 300 as discussed above with reference to Figures 2 to 3f. The memory 404 may contain instructions executable by the processing circuitry 402 such that the orchestration node 400 is operable to perform some or all of the steps of the method 200 and/or 300, as illustrated in Figures 2 to 3f. The instructions may also include instructions for executing one or more telecommunications and/or data communications protocols. The instructions may be stored in the form of the computer program 450. In some examples, the processor or processing circuitry 402 may include one or more microprocessors or microcontrollers, as well as other digital hardware, which may include digital signal processors (DSPs), special-purpose digital logic, etc. The processor or processing circuitry 402 may be implemented by any type of integrated circuit, such as an Application Specific Integrated Circuit (ASIC), Field Programmable Gate Array (FPGA), etc. The memory 404 may include one or several types of memory suitable for the processor, such as read-only memory (ROM), random-access memory, cache memory, flash memory devices, optical storage devices, solid state disk, hard disk drive, etc.

Figure 5 illustrates functional modules in another example of orchestration node 500 which may execute examples of the methods 200 and/or 300 of the present disclosure, for example according to computer readable instructions received from a computer program. It will be understood that the modules illustrated in Figure 5 are functional modules, and may be realised in any appropriate combination of hardware and/or software. The modules may comprise one or more processors and may be integrated to any degree.

Referring to Figure 5, the orchestration node 500 is for orchestrating acquisition of a quantity of communication network data for training a target ML model for use by a communication network node. The orchestration node 500 comprises a data acquisition orchestration function 510 configured to obtain a representation of a data acquisition state for the communication network data. The data acquisition orchestration function 510 is further configured to use an orchestration ML model to map the representation of the data acquisition state to a first amount of the communication network data to be collected from sources of the communication network data, and a remaining amount of the communication network data to be generated using a generative model. The data acquisition orchestration function 510 is further configured to cause at least the first amount of the communication network data to be collected from sources of the communication network data. The data acquisition orchestration function 510 is further configured to, when the collected communication network data fulfils an availability criterion for training of a generative model, cause a generative model for the communication network data to be trained using the collected communication network data. The data acquisition orchestration function 510 is further configured to cause the remaining amount of the communication network data to be generated using the trained generative model. The data acquisition orchestration function 510 is further configured to cause the communication network data, comprising the first amount of collected data and the remaining amount of generated data, to be provided to the communication network node for training of the target ML model. A representation of a data acquisition state for the communication network data comprises: a number of target ML models to be trained using the dataset; a cost of resources for collection of the communication network data from data sources; and a cost of resources for generating the communication network data. The orchestration node 500 may further comprise interfaces 520 which may be operable to facilitate communication with computing and/or other network nodes over suitable communication channels.

Figures 2 to 3f discussed above provide an overview of methods which may be performed according to different examples of the present disclosure. These methods may be performed by an orchestration node as illustrated in Figures 4 and 5, and enable orchestration of acquisition of communication network data such that costs of collecting and generating the data are taken into account in identifying an optimal split between an amount of the data to be collected and an amount of the data to be generated.

There now follows a detailed discussion of how different process steps illustrated in Figures 2 to 3f and discussed above may be implemented, for example by an orchestration node 400 or 500.

An example architecture for implementing the methods 200, 300 may comprise the orchestration node, a data consumer, a data source, and a data generator. The orchestration node may, as discussed above, comprise a request management function and a data acquisition orchestration function. Each of these logical elements is discussed in greater detail below:

The data acquisition orchestration function, also referred to herein as a data_catalogue_orchestrator, is the functional component or module that determines how much data should be collected from each data source and how much data should be generated.

The data consumer, also referred to herein as data_consumer, is a placeholder for any node in a communication network (such as a 3GPP network) that is responsible for training a machine learning model and then performing inference. Such nodes may for example include Network Data Analysis Function (NWDAF) nodes or Operations and Maintenance (OAM) nodes.

The data source, also referred to herein as data_source, is a placeholder for any node in a communication network (such as a 3GPP network), or outside of such a network, that is used for collecting data. Examples of such nodes include UEs and other 3GPP nodes, including gNBs/eNBs, Mobiliyt Management Entity (MME), Packet Gateways etc.

The request management function, also referred to herein as data_catalogue, is the functional component or module that is responsible for knowing the different features that need to be collected for a given data request, and where they are located (in which data source they reside). As such the data_catalogue can be implemented as a distributed key value store.

The data generator, also referred to herein as data_generator, is the functional component or module that is responsible for generating new or synthetic data using input data from data sources and different techniques such as variational autoencoders and/or generate adversarial networks.

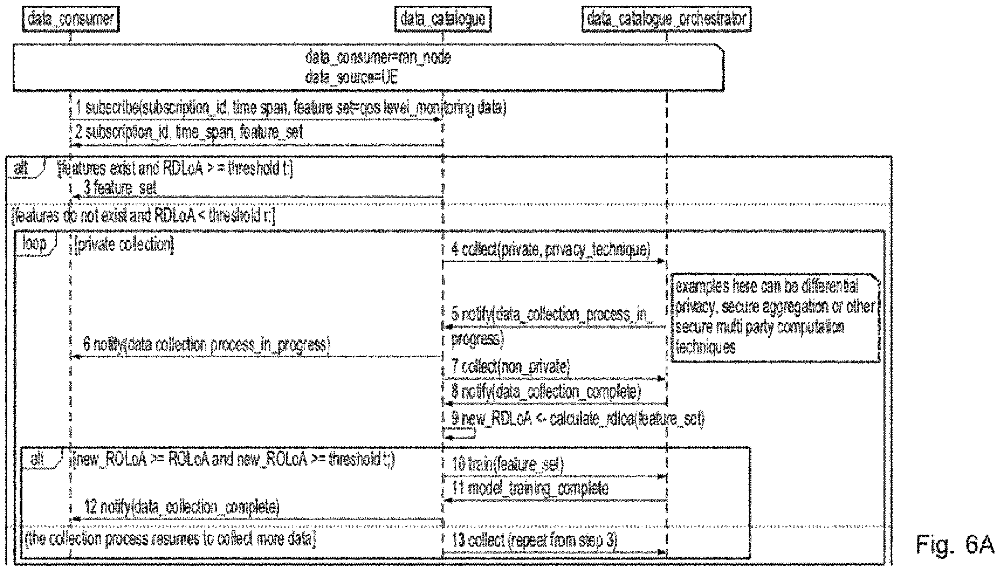

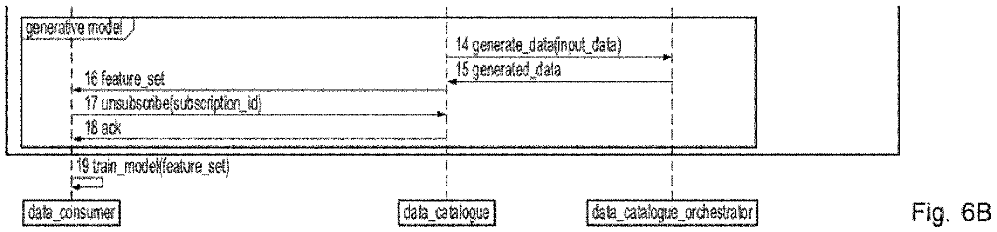

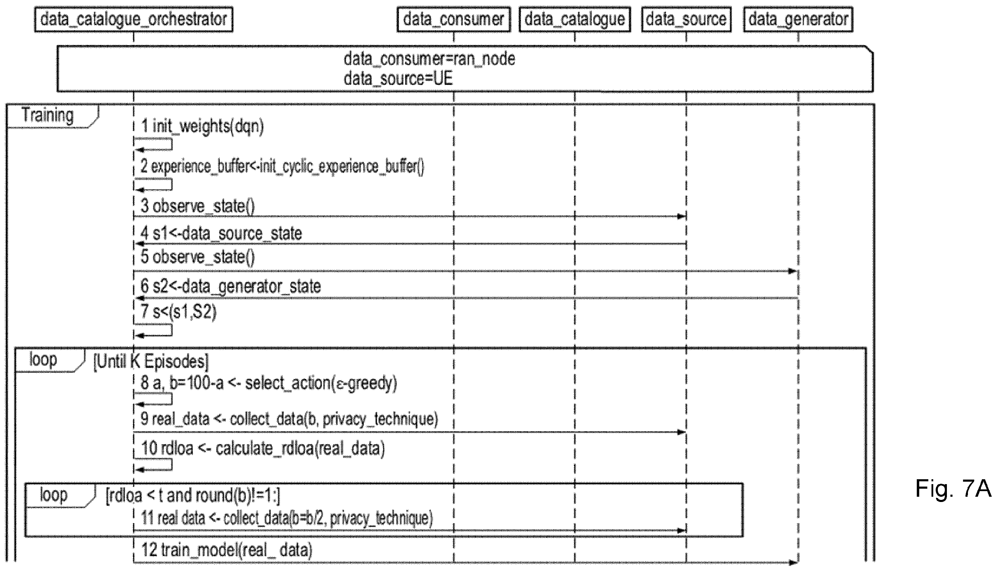

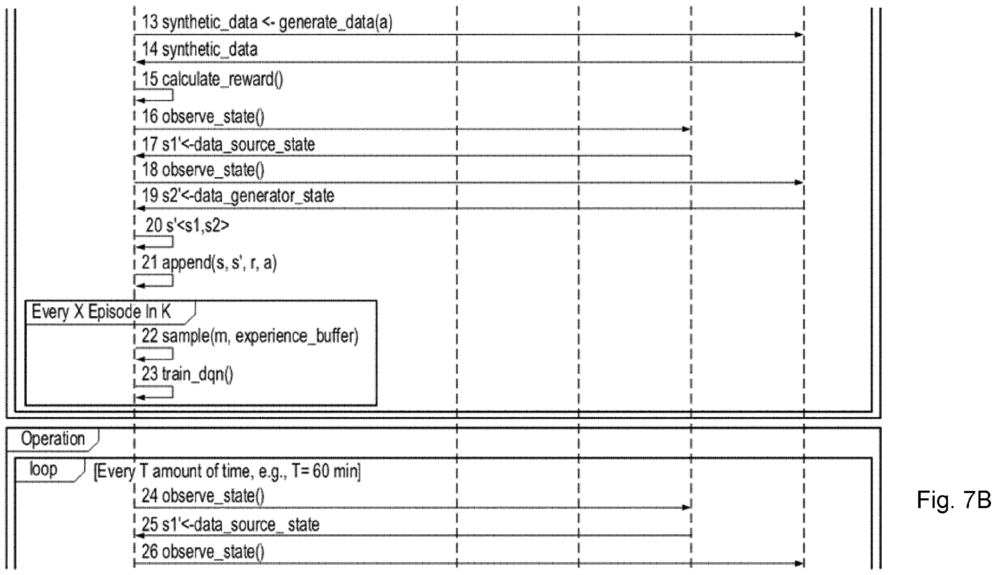

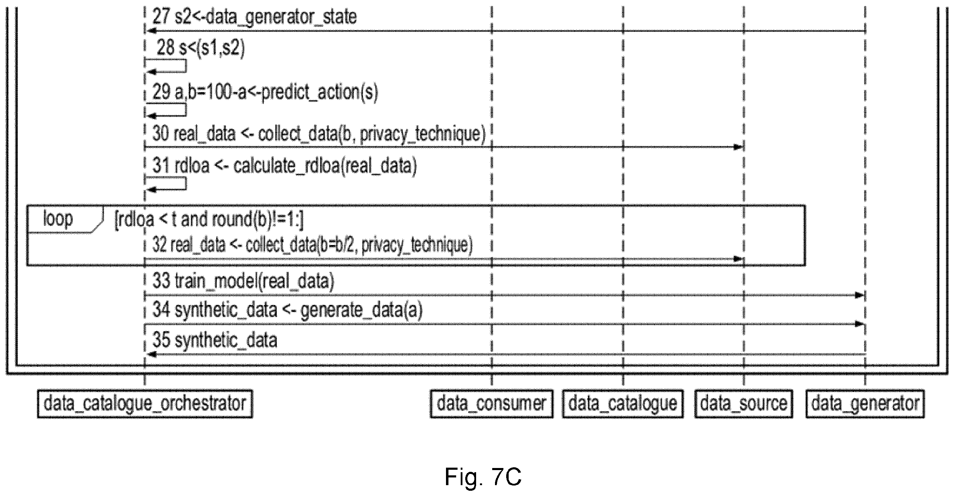

An example interaction between a data_consumer, data_catalogue and data_catalogue_orchestrator is illustrated in the signaling exchange of Figure 6. An example interaction between a data_catalogue_orchestrator, data_source, and data_generator is illustrated in the signaling exchange of Figure 7.

In the interaction illustrated in Figure 6 between data_consumer, data_catalogue and data_catalogue_orchestrator, the following actions take place:

1. The data_consumer entity requests from the data_catalogue entity specific data for use in AI related decision making (for example data to train an ML model to be used by the data_consumer).

2. The data_catalogue entity decides on whether the request can be satisfied via available data, or there is a need to request data acquisition. Data may be acquired via data collection or data generation, as illustrated below, and the decision of whether to collect or generate data, and in what proportions, is managed by the data_catalogue_orchestrator.

Data collection

In data collection, a decision is made to which data_source node a request should be sent. As discussed above with reference to step 330 of Figure 3b, a request may be sent to data sources fulfilling a criterion. The criterion may encompass any one or more of the features below:

Data_consumer requested data characteristics, for instance corresponding to:

RSRP below/above/within certain threshold d dBm
Mobility below/above speed v m/sec
Doppler shift impact below/above a frequency h Hz
Multi-path delay spread

The underlying communication technology, e.g., 4G, 5G, or 6G measurements Node-availability
Network KPI (Load, KPI, channel, privacy, etc.)
Per-node historical reported data quality

A decision may then be taken as to whether the collected data should be used to update one or more data generation models used by the data_generator.

Data Generation

In data generation, a request is sent to the data_generator entity.
Figures 6 and 7 are described below with reference to an example use case of QoS prediction, in which a UE is attached to a network (or a specific network slice) and is operating at a certain QoS Level. A Radio Access Network (RAN) node is tasked to monitor how the UE interacts with the network. The RAN node uses a predictive model to predict whether the quality of service for the given UE is going to degrade, remain the same or improve in the next t timesteps. In order to perform this task, the RAN node needs to exchange a lot of information with the UE for two reasons: to collect enough data to train the prediction model, and to monitor the UE.
Within the same context, an Operations, Administration and Maintenance (OAM) node may be tasked with using the QoS prediction that is produced by the RAN node, with the RAN node simply hosting the model. Based on the prediction, the OAM node will either:

a) amend the radio resource allocation policy to compensate for any predicted degradations; or
b) maintain the radio resource allocation policy as it is if no changes are required.

In the following discussion of the messages exchanged and steps illustrated in Figure 6, it is explained how such a model can be trained according to examples of the present disclosure.
With reference to Figure 6:

1. The process begins with a subscription request from the data_consumer to the data_catalogue (step 301 of method 300). The data_consumer may be any RAN node that is tasked to train a machine learning model such as QoS prediction model, and the data_source may be a UE or any other data source. The subscription request may contain an indication of the model to be trained, or contain a list of the features that need to be collected from the UE. For simplicity in the following disclosure reference is made to a single data_source in the form of a UE, but it will be appreciated that multiple data_sources may be concerned by the request.

2. The data_catalogue leases a subscription id for this request to the data_consumer.

3. Based on the request from the data_consumer, and the data features currently available to the data_catalogue (for example stored by the data catalogue or in a memory accessible to the data_catalogue), the data_catalogue determines whether the available data fulfils an availability criterion for satisfying the request (steps 302, 302a, 302b of method 300). The data_catalogue may do this by calculating a "requested data level of availability" (RDLoA), as below:

a. RDLoA may have integer values in range [0,10], or have values of either 0 or 1, or floating point values in range [0,1].
b. The RDLoA value may be decided based on:

    i. Existence or not of the data.
    ii. Number of samples in the data that match that requested or not.
    iii. Matching requested characteristics, for example,

        1. Experience of the reporting data_source
        2. Radio characteristics (antenna, interference, power, etc)

    iv. Quality of available data, such quality could be calculated on the basis of factors including:

        1. The importance of the available data to the requested AI/ML target or objective; effectively a measure of feature importance
        2. Whether the data is Imbalanced or not
        3. Stability of the data
        4. Index of dispersion
        5. Robustness / Generality against permutation, etc.
        6. Measure of Data or Concept Drift: Gradual, Sudden, Recurring, etc

Depending on the level of satisfaction of the request from the data_consumer that can be achieved with the available data, and whether these data features exist or not, the data catalogue may either:

    reply to the data consumer with n pre-existing feature set that satisfies a high RDLoA (step 3 of Figure 6, step 304 of method 300), or
    forward the request to the data_catalogue_orchestrator for collection and/or generation of these features, which may include training a generative model, and notify the data consumer when the features are available (steps 4-13 of Figure 6, step 305 of method 300).

4. In this step it is assumed that the features do not exist so the data_catalogue_orchestrator starts by collecting those features that are marked as private using a privacy aware technique such as differential privacy, secure aggregation or other secure multi party computation techniques (steps 330, 330a, 330b of method 300).

5. Once step 4 is in progress and/or complete, the data_catalogue receives a notification to this effect from the data_catalogue_orchestrator.

6. The data_catalogue then notifies the consumer that the data collection process is in progress.

7. The data_catalogue_orchestrator is then prompted to collect non-private features from the data source (step 330 of method 300).

8. Once step 7 is in progress and/or complete, the data_catalogue receives a notification to this effect from the data_catalogue_orchestrator.

9. The data_catalogue then calculates the new RDLoA to determine if sufficient data has been collected to train a generative model (steps 340. 340a of method 300).

10. If enough data has been collected, then the data_catalogue_orchestrator orchestrates training of the generative model using the collected data (step 350 of method 300).

11. The data_catalogue is notified when the training of the generative model is complete.

12. The data_catalogue then notifies the data_consumer that the data collection process is complete.

13. If a sufficient amount of data to train the generative model has not yet been collected, then steps 4-13 are repeated (step 340 of the method 300).

14. Once the generative model has been trained, the data_catalogue_orchestrator can be prompted to orchestrate generation of synthetic data using the trained generative model (step 360 of the method 300).

15. The newly generated data is then sent to the data_catalogue (step 370 of the method 300).

16. The data_catalogue sends the feature_set (which contain collected and generated_data) back to the data_consumer (step 372 of the method 300).

17. The data_consumer can now unsubscribe from this process.

18. The data_catalogue acknowledges the request to unsubscribe.

19. The data_consumer proceeds with the training the machine learning model using the data have been provided to it by the data_catalogue.

The following description considers in greater detail the actions of the data_catalogue_orchestrator. The main goal of the Data Catalogue Orchestrator is to address the question of whether data should be collected from data sources (such as UEs) or not, and also whether and to what extent any proportion of that data (for example, 30%) should be collected in a privacy aware manner. The Data Catalogue Orchestrator can then initiate generation of the remaining data using a generative model. The optimal split between collection and generation of data can change over time depending on the bandwidth availability in the network, which is determined by its utilization, other tasks requiring that bandwidth, and the availability and cost of computation resources for running a generative model. Examples of the present disclosure propose to use Reinforcement Learning (RL) to find an optimal split for current network conditions. In order to use RL for this purpose, the problem of determining an optimal split between collection and generation of data can first be formalized as a Markov Decision Process (MDP), comprising a state space, action space and a reward function.

State space

The state space for the RL problem may comprise, *inter alia,* the number of subscribers (how many machine learning tasks are interested in the feature set), the available uplink/downlink for each data source (for example, UE) that can produce those features, the number of data sources (for example, UEs), the expected volume of data and the available resources for running a generative model (CPU/memory). As discussed in further detail below, the state space can be further subdivided into a data collection state space and a data generation state space.

Action space

The action space comprises the possible splits between collection and generation of data. For simplicity, in one example, an action space may be considered in which an agent learns to choose between generating a=[0%, 10% 20%, 30%, 40%...100%] of data (11 actions). Choosing one of these actions means that the remaining data should be collected A=(100-a)%.

Reward function

The reward function may be designed to reward the model (higher reward value) for causing data to be generated when the data sources have little bandwidth and there are spare computation resources to train a generative model, and to impose a penalty on the model (lower reward value) if the model causes data to be collected directly from the data sources when there is spare computational capacity to run a generative model.
One example expression of this general relationship is shown in the equation bellow:

$$R = \frac{time\_to\_upload}{time\_to\_generate}$$

Time_to_upload is the time duration (in seconds or minutes) to upload the data to be collected from each data source, and can be calculated by dividing the volume of data by the available transfer rate (MB/s for example).
Time_to_generate is the time duration for the generative model to generate new data, including the time it takes for the cloud based infrastructure to allocate needed resources (CPUs/GPUs, Memory) and also the volume of data. The volume of data is proportionate to the Floating Point Operations per Second (FLOPs) that have been allocated by the cloud infrastructure.

Another example expression of the reward function, taking account of factors other than time, is shown in the equation below:

$$R = \frac{\alpha_{gt}P_{generate} - \alpha_{ge}E_{\{(FLOPS)\}} - \alpha_{gi}F_{Inter(FLOPS)}}{\alpha_{st} + \alpha_{si}D_{Inter}(TxData) + \alpha_{se}E_{\{(TxData)\}} + \alpha_{soh}F_{OH(TxData)}}$$

This equation represents a function of computation complexity and energy efficiency. The table below provides a discussion of the parameters in the above reward function:

| | |
|---|---|
| $P_{generate}, \alpha_{gt}$ | A normalized function that expresses the percentage of data that is obtained from generation, and the corresponding weight of this parameter |
| $E_{\{(FLOPS)\}}, \alpha_{ge}$ | A normalized function that expresses the energy consumption due to computation complexity FLOPS, and the corresponding weight of this parameter |
| $F_{Inter(FLOPS)}, \alpha_{gi}$ | A normalized function that expresses the processing interference resulting from the generative module consuming processing power of other network functions, and the corresponding weight of this parameter |
| $T_{upload}, \alpha_{st}$ | A normalized function that expresses the time taken for the data source to measure, collect and upload the data_measurement, and the corresponding weight of this parameter |
| $D_{inter}(TxData), \alpha_{si}$ | A normalized function that expresses the interference caused by the data source on other UEs due to transmission of measurement data TxData, and the corresponding weight of this parameter |
| $E_{\{(TxData)\}}, \alpha_{se}$ | A normalized function that expresses the energy consumption due to transmission of the measurement data TxData, and the corresponding weight of this parameter |
| $F_{OH(TxData)}, \alpha_{soh}$ | A normalized function the expresses the exerted overhead due to the transmission of measurement data, and the corresponding weight of this parameter |

An example interaction between a data_catalogue_orchestrator, data_source, and data_generator is illustrated in the signaling exchange of Figure 7, including a learning phase (steps 1-23) and an operational phase (steps 24-35). In the example illustrated in Figure 7, the Deep Q-Learning approach is used to train an agent to predict an optimal split between data collection and data generation. In an alternative example, a Dueling Deep Q-Learning approach may be employed, in which an additional target Q network is used to make the learning process more stable (i.e., avoid catastrophic forgetting cases). In another example, an actor/critic approach can be used in a similar manner. An advantage of an actor/critic approach is that the actions learned in such an implementation can also be continuous values, so the action space can be any value between [0..1] as opposed to increments of 10 as illustrated in the example of Figure 7 discussed below.

With reference to Figure 7:

1. The Deep Q Learning network (DQN) is first initialized by the data_catalogue_orchestrator. This network is used to learn how to predict the next action (how much data to collect, how much to generate) given the previous state, the next state and the reward of the action taken.
2. The data_catalogue_orchestrator then initializes an experience buffer, in which will be recorded a set of experiences (combinations of previous state, next state, reward and action) which will be used as a training set for the DQN.
3. The data_catalogue_orchestrator then collects information from the state space of each data source (step 310, 310b of method 300). There may be multiple data sources but for clarity only a single data source is illustrated in Figure 7. In the case of multiple data sources an aggregation mechanism may be used to combine the state space of all data sources.
4. The state space of the data source(s) is retrieved and stored as s1 (steps 310, 310b of the method 300).
5. The data_catalogue_orchestrator then collects information from the state space of the data generator (for example, availability of computational resources) (steps 310, 310c of the method 300).
6. The state space of the data generator is retrieved and stored as s2 (steps 310, 310c of the method 300).
7. The state space of the data source(s) and data generator are then combined to produce the data acquisition state space discussed above (step 310 of the method 300).

Steps 8-19 then repeat in a loop, and are used for training the DQN model.

8. In step 8 an action is chosen using a policy such as ε-greedy. The action here is the percentage of samples to be generated (denoted as a) and complementary b=(100-a), which is the number of samples to be collected (steps 320, 320a, 320b, 320bii of the method 300).

9. Real data is then collected from the data source(s), using a privacy aware technique if required (steps 330, 330a, 330b of the method 300).

10. The data_catalogue_orchestrator then calculates the RDLoA metric to determine if sufficient useful data (for example, with high enough variance) has been collected to train the generative model (step 340, 340a of the method 300).

11. If insufficient data has been collected, the data_catalogue_orchestrator incrementally collects b=b/2 data until sufficient representative data has been collected to train the generative model (steps 340, 330 of the method 300).

12. The generative model is then trained using the collected data (step 360 of the method 300).

13. The data_catalogue_orchestrator then requests the generative model to produce synthetic data (step 370 of the method 300).

14. This synthetic data is generated and provided by the generative model to the data_catalogue_orchestrator.

15. The reward of the action (the amount of data to be collected and generated) is then calculated by the data_catalogue_orchestrator, for example using the equation presented above (steps 374, 374a, 374b, 374c of the method 300).

16. The data_catalogue_orchestrator then requests a new state of the data source(s) (step 376 of the method 300).

17. The new state of the data source(s) is received and stored as s1'.

18. The data_catalogue_orchestrator then requests a new state of the data generator (step 376 of the method 300).

19. The new state of the data generator is received and stored as s2'.

20. The states s1' and s2' are combined to produce the new data acquisition state s' (step 376 of the method 300).

21. This information is then added to the experience buffer (step 378 of the method 300).

22. In step 22, the data_catalogue_orchestrator collects samples from the experience buffer.

23. The data_catalogue_orchestrator then uses these samples to train the DQN model (step 380 of the method 300).

Steps 24-35 illustrate an operational phase in which the DQN is not re-trained. This is in contrast to the learning phase illustrated above, in which the DQN is constantly learning from its environment.

24. The data_catalogue_orchestrator requests the state of each data source (steps 310, 310b of the method 300).

25. These states are received and stored as s1.

26. The data_catalogue_orchestrator then requests the state of the data_generator (steps 310, 310c of the method 300).

27. This state is received and stored as s2.

28. The data_catalogue_orchestrator then combines these states to form the data acquisition state state1 (step 310 of the method 300).

29. In contrast to the learning phase, in which an action is selected using a policy (for example epsilon greedy to determine whether to select an action output by the DQN or a random action), the data_catalogue_orchestrator now relies on the trained DQN to output an action in the form of "a" (how much data to generate) and/or "b" (how much data to collect), where b=100-a (steps 320, 320a, 320b, 320bii of the method 300).

30. The data_catalogue_orchestrator then initiates collection of real data from the data source(s) (steps 330, 330a, 330b of the method 300).

31. The data_catalogue_orchestrator calculates the RDLoA of the collected data (steps 340, 340a of the method 300).

32. The data collection process is then repeated until sufficient real data is available to train the generative model (steps 340, 330 of the method 300).

33. The generative model is then trained using the collected real data (step 335076 of the method 300).

34. The data_generator then generates synthetic data using the trained generative model (step 360 of the method 300).

35. In step 35 the synthetic data is stored in the data_catalogue (step 372 of the method 300). This means that any data_consumer can now ask for these data to train their corresponding model (see for example step 19 in Figure 6).

While the above description of example signalling exchanges is provided in the context of a QoS use case, example methods according to the present disclosure can be used in a wide variety of use cases, examples of which are discussed below.

QoS Prediction: this example use case is presented above.

Mobility procedures (e.g., Handover): ML models used in connection with mobility procedures typically require information as to how users move in space/time. Example methods according to the present disclosure can be used to determine to what extent a generative model that produces trajectories of UE can be trained and used to provide synthetic data for training instead of collecting data from each UE.

Detection of Radio Link Failure (RLF): RLF detection models are trained with alarm data either collected from the UE or from the network equipment. Example methods according to the present disclosure can be used determine to what extent generative models can be used to mimic the way alarms are generated, and thus produce a dataset to train an ML model for the purpose of preventive maintenance.

Centralized/Distributed Multi-Antenna Pre-Coder matrix: Precoding matrices are used to reduce any potential corruption in a communication channel. However, expected corruption is not known in advance, as at this stage there is very little CSI information. To compensate for this problem generative models can be used from historical communication data, which models can learn the corruption of channels and so guide appropriate tuning of the pre-coder matrix. Example methods according to the present disclosure can be used to determine how much synthetic data to generate and use for training.

Multi-User Radio Resources Management (RRM): A generative model can be used to model the way resources are allocated for different uses given the Channel Quality Indicator (CQI) for each UE at a different time and location, and moving at different speeds. Instead of using real data example methods according to the present disclosure can guide collection of a seed of such data, and generation of synthetic data for training a resource allocation model.

Examples of the present disclosure thus propose an orchestration node that may comprise a request management function, for example implemented as a data catalogue, and a data acquisition orchestration function, for example implemented as a data catalogue orchestrator. The orchestration node may keep track of the different features that are needed for different machine learning models and may determine, using reinforcement learning (RL) or other optimization techniques, how much raw data to collect from UEs (or other data sources) and how much synthetic data to generate using generative models. This determination may be made in the basis of cost, including availability, of computational resources and network bandwidth. In addition, depending on requirements for particular data features, the orchestration node can apply a privacy aware data extraction technique (for example, differential privacy) when collecting data. Generating data from private data yields private-generated data.

Advantages afforded by example methods according to the present disclosure include reduced network footprint, as when the cost of collecting data is high, a version of a digital twin of this data (the product of a generative model) can be used to train ML models for use by a communication network node. Adaptive privacy can be used according to different regulations, as differential privacy aware techniques can be used when collecting data from the UEs. A generative model can then be trained on data which contain noise (as a consequence of the use of differential privacy). Consequently, the new data that is produced by the generative model is also private. Instead of relying exclusively on generative models, examples of the present disclosure determine dynamically how to mix raw data with synthetic, generated data, allowing the system to learn from real data and then use the real data distribution to generate the remaining samples. This mix of real and synthetic data is managed efficiently based on available network footprint and computational resources. In many data analysis situations the use of a generative model is advantageous, as it generates data on demand in a smooth and controlled manner compared to collecting data from the real world, which may have uncontrollable delay or missing values. Improvements are therefore offered in energy efficiency, spectral efficiency and throughput of the communication network, and system capacity and user enrollment.

The methods of the present disclosure may be implemented in hardware, or as software modules running on one or more processors. The methods may also be carried out according to the instructions of a computer program, and the present disclosure also provides a computer readable medium having stored thereon a program for carrying out any of the methods described herein. A computer program embodying the disclosure may be stored on a computer readable medium, or it could, for example, be in the form of a signal such as a downloadable data signal provided from an Internet website, or it could be in any other form.

It should be noted that the above-mentioned examples illustrate rather than limit the disclosure, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

**Claims**

1. A method (200) for orchestrating acquisition of a quantity of communication network data for training a target Machine Learning, ML, model for use by a communication network node, the method, performed by an orchestration node, comprising:

obtaining (210) a representation of a data acquisition state for the communication network data;

using (220) an orchestration ML model to map the representation of the data acquisition state to a first amount of the communication network data to be collected from sources of the communication network data, and a remaining amount of the communication network data to be generated using a generative model;

causing (230) at least the first amount of the communication network data to be collected from sources of the communication network data;

when the collected communication network data fulfils an availability criterion for training (240) of a generative model, causing (250) a generative model for the communication network data to be trained using the collected communication network data;

causing (260) the remaining amount of the communication network data to be generated using the trained generative model; and

causing (270) the quantity of communication network data, comprising the first amount of collected data and the remaining amount of generated data, to be provided to the communication network node for training of the target ML model;

wherein a representation of a data acquisition state for the communication network data comprises:

> a number of target ML models to be trained using the communication network data (210a);
> a cost of resources for collection of the communication network data from data sources (210b); and
> a cost of resources for generating the communication network data (210c).

2. The method as claimed in claim 1, further comprising:
selecting (330) sources for collection of the communication network data according to a selection criterion.

3. The method as claimed in claim 1 or 2, wherein a cost of resources for collection of the communication network data from data sources comprises:

> a number of data sources available to provide the communication network data (310bi);
> an expected volume of the communication network data in the quantity of communication network data to be acquired (310bii);
> communication network resources available to each source of the communication network data for provision of the communication network data (310biii); and
> a priority of the task of acquiring the communication network data (310biv).

4. The method as claimed in any one of claims 1 to 3, wherein a cost of resources for generating the communication network data comprises:

> an expected volume of the communication network data in the quantity of communication network data to be acquired (310ci);
> computational, software and memory resources available for running a generative model to generate the communication network data (310cii); and
> a priority of the task of acquiring the communication network data (310ciii).

5. The method as claimed in any one of the preceding claims, wherein using an orchestration ML model to map the representation of the data acquisition state to a first amount of the communication network data to be collected from sources of the communication network data, and a remaining amount of the communication network data to be generated using a generative model, comprises:

> inputting (320a) the obtained representation of the data acquisition state to the orchestration ML model, wherein the orchestration ML model processes the representation in accordance with its parameters, and outputs an orchestration ML model value for at least one of the first or remaining amounts of the communication network data (320ai); and
> selecting (320b) values for the first and remaining amounts of the communication network data based on the orchestration ML model value output by the orchestration ML model.

6. The method as claimed in claim 5, wherein, during a learning phase, selecting values for the first and remaining amounts of the communication network data based on the orchestration ML model value output by the orchestration ML model comprises using for a randomisation process to balance selection of a random value for at least one of the first and remaining amounts with selection of the orchestration ML model value for at least one of the first and remaining amounts (320bi).

7.  The method as claimed in claim 5 or 6, wherein, during an exploitation phase, selecting values for the first and remaining amounts of the communication network data based on the orchestration ML model value output by the orchestration ML model comprises selecting the orchestration ML model value for at least one of the first and remaining amounts (320bii).

8.  The method as claimed in any one of the preceding claims, further comprising:
    calculating (374) a reward value for the communication network data acquisition as a function of at least one of:

    time efficiency of communication network data acquisition (374a);
    energy efficiency of communication network data acquisition (374b);
    communication network impact of communication network data acquisition (374c).

9.  The method as claimed in any one of the preceding claims, further comprising:
    obtaining (376) an updated representation of the data acquisition state following collection of at least the first amount of communication network data and generation of the remaining amount of communication network data.

10. The method as claimed in claim 9, when dependent on claim 8, further comprising adding (378):

    the obtained representation of the data acquisition state for the communication network data;
    the obtained updated representation of the data acquisition state for the communication network data;
    at least one of the first or remaining amounts of the communication network data; and
    the calculated reward value
    to an experience buffer for the orchestration ML model.

11. The method as claimed in claim 10, further comprising, during a learning phase:
    using (380) the contents of the experience buffer to update parameters of the orchestration ML model such that the orchestration ML model will map a representation of a data acquisition state to a first or remaining amount of communication network data that will generate maximum reward value.

12. The method as claimed in any one of the preceding claims, wherein causing at least the first amount of the communication network data to be collected from sources of the communication network data comprises:

    identifying (330a) features of the communication network data that are subject to privacy requirements; and,
    for identified data features:
    causing (330b) values for the identified data features to be collected using a privacy aware technique.

13. A computer program product comprising a computer readable medium, the computer readable medium having computer readable code embodied therein, the computer readable code being configured such that, on execution by a suitable computer or processor, the computer or processor is caused to perform a method of any one of claims 1 to 12.

14. An orchestration node (400) for orchestrating acquisition of a quantity of communication network data of communication network data for training a target Machine Learning, ML, model for use by a communication network node, the orchestration node comprising processing circuitry (402) configured to cause the orchestration node to:

    obtain a representation of a data acquisition state for the communication network data;
    use an orchestration ML model to map the representation of the data acquisition state to a first amount of the communication network data to be collected from sources of the communication network data, and a remaining amount of the communication network data to be generated using a generative model;
    cause at least the first amount of the communication network data to be collected from sources of the communication network data;
    when the collected communication network data fulfils an availability criterion for training of a generative model, cause a generative model for the communication network data to be trained using the collected communication network data;
    cause the remaining amount of the communication network data to be generated using the trained generative model; and
    cause the quantity of communication network data, comprising the first amount of collected data and the remaining amount of generated data, to be provided to the communication network node for training of the target ML model;

wherein a representation of a data acquisition state for the communication network data comprises:

a number of target ML models to be trained using the communication network data;
cost of resources for collection of the communication network data from data sources; and
cost of resources for generating the communication network data.

15. The orchestration node as claimed in claim 14, wherein the processing circuitry is further configured to cause the orchestration node to perform the steps of any one of claims 2 to 12.

**Patentansprüche**

1. Verfahren (200) zur Orchestrierung der Erfassung einer Menge von Kommunikationsnetzwerkdaten zum Trainieren eines Zielmodells für maschinelles Lernen, ML, zur Verwendung durch einen Kommunikationsnetzwerkknoten, wobei das Verfahren, das von einem Orchestrierungsknoten durchgeführt wird, Folgendes umfasst:

Erhalten (210) einer Darstellung eines Datenerfassungszustands für die Kommunikationsnetzwerkdaten;
Verwenden (220) eines ML-Orchestrierungsmodells zum Zuordnen des Datenerfassungszustands zu einem ersten Betrag der Kommunikationsnetzwerkdaten, der aus Quellen der Kommunikationsnetzwerkdaten gesammelt werden soll, und einem restlichen Betrag der Kommunikationsnetzwerkdaten, der unter Verwendung eines generativen Modells erzeugt werden soll;
Veranlassen (230), dass zumindest der erste Betrag der Kommunikationsnetzwerkdaten aus Quellen der Kommunikationsnetzwerkdaten gesammelt wird;
wenn die gesammelten Kommunikationsnetzwerkdaten ein Verfügbarkeitskriterium zum Trainieren (240) eines generativen Modells erfüllen, Veranlassen (250), dass ein generatives Modell für die Kommunikationsnetzwerkdaten unter Verwendung der gesammelten Kommunikationsnetzwerkdaten trainiert wird;
Veranlassen (260), dass der restliche Betrag der Kommunikationsnetzwerkdaten unter Verwendung des trainierten generativen Modells erzeugt wird;
Veranlassen (270), dass die Menge von Kommunikationsnetzwerkdaten, die den ersten Betrag von gesammelten Daten und den restlichen Betrag von erzeugten Daten umfasst, für den Kommunikationsnetzwerkknoten bereitgestellt wird, um das ML-Zielmodell zu trainieren;
wobei eine Darstellung eines Datenerfassungszustands für die Kommunikationsnetzwerkdaten Folgendes umfasst:

eine Anzahl von ML-Zielmodellen, die unter Verwendung der Kommunikationsnetzwerkdaten trainiert werden soll (210a);
Kosten von Ressourcen zur Sammlung der Kommunikationsnetzwerkdaten aus Datenquellen (210b); und
Kosten von Ressourcen zum Erzeugen der Kommunikationsnetzwerkdaten (210c).

2. Verfahren nach Anspruch **1,** ferner umfassend:
Auswählen (330) von Quellen zur Sammlung der Kommunikationsnetzwerkdaten gemäß einem Auswahlkriterium.

3. Verfahren nach Anspruch 1 oder 2, wobei Kosten von Ressourcen zur Sammlung der Kommunikationsnetzwerkdaten aus Datenquellen Folgendes umfassen:

eine Anzahl von Datenquellen, die verfügbar ist, um die Kommunikationsnetzwerkdaten bereitzustellen (310bi);
ein erwartetes Volumen der Kommunikationsnetzwerkdaten in der Menge von zu erfassenden Kommunikationsnetzwerkdaten (310bii);
Kommunikationsnetzwerkressourcen, die für jede Quelle der Kommunikationsnetzwerkdaten zur Bereitstellung der Kommunikationsnetzwerkdaten verfügbar sind (310biii); und
eine Priorität der Aufgabe des Erfassens der Kommunikationsnetzwerkdaten (310biv).

4. Verfahren nach einem der Ansprüche 1 bis 3, wobei Kosten von Ressourcen zum Erzeugen der Kommunikationsnetzwerkdaten Folgendes umfassen:

ein erwartetes Volumen der Kommunikationsnetzwerkdaten in der Menge von zu erfassenden Kommunikationsnetzwerkdaten (310ci);
Rechen-, Software- und Speicherressourcen, die zum Ausführen eines generativen Modells verfügbar sind, um die Kommunikationsnetzwerkdaten zu erzeugen (310cii); und
eine Priorität der Aufgabe des Erfassens der Kommunikationsnetzwerkdaten (310ciii).

**5.** Verfahren nach einem der vorhergehenden Ansprüche, wobei das Verwenden eines ML-Orchestrierungsmodells zum Zuordnen des Datenerfassungszustands zu einem ersten Betrag der Kommunikationsnetzwerkdaten, der aus Quellen der Kommunikationsnetzwerkdaten gesammelt werden soll, und einem restlichen Betrag der Kommunikationsnetzwerkdaten, der unter Verwendung eines generativen Modells erzeugt werden soll, Folgendes umfasst:

Eingeben (320a) der erhaltenen Darstellung des Datenerfassungszustands in das **ML-**Orchestrierungsmodell, wobei das **ML-**Orchestrierungsmodell die Darstellung gemäß seinen Parametern verarbeitet und einen **ML-**Orchestrierungsmodellwert für mindestens einen des ersten oder des restlichen Betrags der Kommunikationsnetzwerkdaten ausgibt (320ai); und
Auswählen (320b) von Werten für den ersten und den restlichen Betrag der Kommunikationsnetzwerkdaten basierend auf dem von dem ML-Orchestrierungsmodell ausgegebenen ML-Orchestrierungsmodellwert.

**6.** Verfahren nach Anspruch 5, wobei während einer Lernphase das Auswählen von Werten für den ersten und den restlichen Betrag der Kommunikationsnetzwerkdaten basierend auf dem von dem ML-Orchestrierungsmodell ausgegebenen ML-Orchestrierungsmodellwert Verwenden für einen Randomisierungsprozess zum Ausgleichen der Auswahl eines Zufallswerts für mindestens einen des ersten und des restlichen Betrags mit der Auswahl des ML-Orchestrierungsmodellwerts für mindestens einen des ersten und des restlichen Betrags umfasst (320bi).

**7.** Verfahren nach Anspruch 5 oder **6,** wobei während einer Nutzungsphase das Auswählen von Werten für den ersten und den restlichen Betrag der Kommunikationsnetzwerkdaten basierend auf dem von dem ML-Orchestrierungsmodell ausgegebenen **ML-**Orchestrierungsmodellwert Auswählen des **ML-**Orchestrierungsmodellwerts für mindestens einen des ersten und des restlichen Betrags umfasst (320bii).

**8.** Verfahren nach einem der vorhergehenden Ansprüche, ferner umfassend:
Berechnen (374) eines Belohnungswerts für die Kommunikationsnetzwerkdatenerfassung als eine Funktion von mindestens einem von Folgenden:

Zeiteffizienz der Kommunikationsnetzwerkdatenerfassung (374a);
Energieeffizienz der Kommunikationsnetzwerkdatenerfassung (374b);
Auswirkung der Kommunikationsnetzwerkdatenerfassung auf das Kommunikationsnetzwerk (374c).

**9.** Verfahren nach einem der vorhergehenden Ansprüche, ferner umfassend:
Erhalten (376) einer aktualisierten Darstellung des Datenerfassungszustands nach der Sammlung zumindest des ersten Betrags von Kommunikationsnetzwerkdaten und der Erzeugung der restlichen Betrags von Kommunikationsnetzwerkdaten.

**10.** Verfahren nach Anspruch 9, wenn von Anspruch 8 abhängig, ferner umfassend Hinzufügen (378):

der erhaltenen Darstellung des Datenerfassungszustands für die Kommunikationsnetzwerkdaten;
der erhaltenen aktualisierten Darstellung des Datenerfassungszustands für die Kommunikationsnetzwerkdaten;
mindestens eines des ersten oder des restlichen Betrags der Kommunikationsnetzwerkdaten und
des berechneten Belohnungswerts
zu einem Erfahrungspuffer für das ML-Orchestrierungsmodell.

**11.** Verfahren nach Anspruch 10, ferner umfassend während der Lernphase:
Verwenden (380) der Inhalte des Erfahrungspuffers zum Aktualisieren von Parametern des ML-Orchestrierungsmodells, sodass das ML-Orchestrierungsmodell eine Darstellung eines Datenerfassungszustands zu einem ersten oder einem restlichen Betrag der Kommunikationsnetzwerkdaten zuordnet, der den maximalen Belohnungswert erzeugt.

**12.** Verfahren nach einem der vorhergehenden Ansprüche, wobei das Veranlassen, dass der erste Betrag der Kommunikationsnetzwerkdaten aus Quellen der Kommunikationsnetzwerkdaten gesammelt wird, Folgendes umfasst:

Identifizieren (330a) von Merkmalen der Kommunikationsnetzwerkdaten, die Datenschutzanforderungen unterliegen; und

für identifizierte Datenmerkmale:

Veranlassen (330b), das Werte für die identifizierten Datenmerkmale unter Verwendung einer datenschutzbewussten Technik gesammelt werden.

13. Computerprogrammprodukt, umfassend ein computerlesbares Medium, wobei das computerlesbare Medium computerlesbarem Code darauf enthalten aufweist, wobei der computerlesbare Code derart konfiguriert ist, dass bei Ausführung durch einen geeigneten Computer oder Prozessor der Computer oder Prozessor zum Durchführen des Verfahrens nach einem der Ansprüche 1 bis 12 veranlasst wird.

14. Orchestrierungsknoten (400) zum Orchestrieren der Erfassung einer Menge von Kommunikationsnetzwerkdaten von Kommunikationsnetzwerkdaten zum Trainieren eines Zielmodells für maschinelles Lernen, ML, zur Verwendung durch einen Kommunikationsnetzwerkknoten, wobei der Orchestrierungsknoten Verarbeitungsschaltungsanordnung (402) umfasst, die den Orchestrierungsknoten zu Folgendem veranlasst:

Erhalten einer Darstellung eines Datenerfassungszustands für die Kommunikationsnetzwerkdaten;

Verwenden eines ML-Orchestrierungsmodells zum Zuordnen des Datenerfassungszustands zu einem ersten Betrag der Kommunikationsnetzwerkdaten, der aus Quellen der Kommunikationsnetzwerkdaten gesammelt werden soll, und einem restlichen Betrag der Kommunikationsnetzwerkdaten, der unter Verwendung eines generativen Modells erzeugt werden soll;

Veranlassen, dass zumindest der erste Betrag der Kommunikationsnetzwerkdaten aus Quellen der Kommunikationsnetzwerkdaten gesammelt wird;

wenn die gesammelten Kommunikationsnetzwerkdaten ein Verfügbarkeitskriterium zum Trainieren eines generativen Modells erfüllen, Veranlassen, dass ein generatives Modell für die Kommunikationsnetzwerkdaten unter Verwendung der gesammelten Kommunikationsnetzwerkdaten trainiert wird;

Veranlassen, dass der restliche Betrag der Kommunikationsnetzwerkdaten unter Verwendung des trainierten generativen Modells erzeugt wird;

Veranlassen, dass die Menge von Kommunikationsnetzwerkdaten, die den ersten Betrag von gesammelten Daten und den restlichen Betrag von erzeugten Daten umfasst, für den Kommunikationsnetzwerkknoten bereitgestellt wird, um das ML-Zielmodell zu trainieren;

wobei eine Darstellung eines Datenerfassungszustands für die Kommunikationsnetzwerkdaten Folgendes umfasst:

eine Anzahl von ML-Zielmodellen, die unter Verwendung der Kommunikationsnetzwerkdaten trainiert werden soll;

Kosten von Ressourcen zur Sammlung der Kommunikationsnetzwerkdaten aus Datenquellen; und

Kosten von Ressourcen zum Erzeugen der Kommunikationsnetzwerkdaten.

15. Orchestrierungsknoten nach Anspruch 14, wobei die Verarbeitungsschaltungsanordnung ferner so konfiguriert ist, dass sie den Orchestrierungsknoten zum Durchführen des Verfahrens nach einem der Ansprüche 2 bis 12 veranlasst.

**Revendications**

1. Procédé (200) d'orchestration d'acquisition d'une quantité de données de réseau de communication pour entraîner un modèle d'apprentissage automatique, ML, cible destiné à être utilisé par un nœud de réseau de communication, le procédé, réalisé par un nœud d'orchestration, comprenant :

l'obtention (210) d'une représentation d'un état d'acquisition de données pour les données de réseau de communication ;

l'utilisation (220) d'un modèle ML d'orchestration pour mapper la représentation de l'état d'acquisition de données avec une première quantité des données de réseau de communication à collecter depuis des sources des données de réseau de communication, et une quantité restante des données de réseau de communication à générer à l'aide d'un modèle génératif ;

le fait d'amener (230) au moins la première quantité des données de réseau de communication à être collectées depuis des sources des données de réseau de communication ;

lorsque les données de réseau de communication collectées remplissent un critère de disponibilité pour l'entraînement (240) d'un modèle génératif, le fait d'amener (250) un modèle génératif pour les données de réseau de communication à être entraîné à l'aide des données de réseau de communication collectées ;

le fait d'amener (260) la quantité restante des données de réseau de communication à être générées à l'aide du modèle génératif entraîné ; et

le fait d'amener (270) la quantité de données de réseau de communication, comprenant la première quantité de données collectées et la quantité restante de données générées, à être fournies au nœud de réseau de communication pour l'entraînement du modèle ML cible ;

dans lequel une représentation d'un état d'acquisition de données pour les données de réseau de communication comprend :

un nombre de modèles ML cibles à entraîner à l'aide des données de réseau de communication (210a) ;
un coût de ressources de collecte des données de réseau de communication depuis des sources de données (210b) ; et
un coût de ressources de génération des données de réseau de communication (210c).

2. Procédé selon la revendication 1, comprenant en outre :
la sélection (330) de sources de collecte des données de réseau de communication selon un critère de sélection.

3. Procédé selon la revendication 1 ou 2, dans lequel un coût de ressources de collecte des données de réseau de communication depuis des sources de données comprend :

un nombre de sources de données disponibles pour fournir les données de réseau de communication (310bi) ;
un volume prévu des données de réseau de communication dans la quantité de données de réseau de communication à acquérir (310bii) ;
des ressources de réseau de communication disponibles pour chaque source des données de réseau de communication pour la fourniture des données de réseau de communication (310biii) ; et
une priorité de la tâche d'acquisition des données de réseau de communication (310biv).

4. Procédé selon l'une quelconque des revendications 1 à 3, dans lequel un coût de ressources de génération des données de réseau de communication comprend :

un volume prévu des données de réseau de communication dans la quantité de données de réseau de communication à acquérir (310ci) ;
des ressources de calcul, de logiciel et de mémoire disponibles pour le fonctionnement d'un modèle génératif pour générer les données de réseau de communication (310cii) ; et
une priorité de la tâche d'acquisition des données de réseau de communication (310ciii).

5. Procédé selon l'une quelconque des revendications précédentes, dans lequel l'utilisation d'un modèle ML d'orchestration pour mapper la représentation de l'état d'acquisition de données avec une première quantité des données de réseau de communication à collecter depuis des sources des données de réseau de communication, et une quantité restante des données de réseau de communication à générer à l'aide d'un modèle génératif, comprend :

l'entrée (320a) de la représentation obtenue de l'état d'acquisition de données dans le modèle ML d'orchestration, dans lequel le modèle ML d'orchestration traite la représentation en fonction de ses paramètres, et délivre une valeur de modèle ML d'orchestration pour au moins l'une parmi la première quantité et la quantité restante des données de réseau de communication (320ai) ; et
la sélection (320b) de valeurs pour la première quantité et la quantité restante des données de réseau de communication sur la base de la valeur de modèle ML d'orchestration délivrée par le modèle ML d'orchestration.

6. Procédé selon la revendication 5, dans lequel, au cours d'une phase d'apprentissage, la sélection de valeurs pour la première quantité et la quantité restante des données de réseau de communication sur la base d'une valeur de modèle ML d'orchestration délivrée par le modèle ML d'orchestration comprend l'utilisation d'un processus de randomisation pour équilibrer une sélection d'une valeur aléatoire pour au moins l'une parmi la première quantité et la quantité restante avec une sélection de la valeur de modèle ML d'orchestration pour au moins l'une parmi la première quantité et la quantité restante (320bi).

7. Procédé selon la revendication 5 ou 6, dans lequel, au cours d'une phase d'exploitation, la sélection de valeurs pour la première quantité et la quantité restante des données de réseau de communication sur la base de la valeur de modèle ML d'orchestration délivrée par le modèle ML d'orchestration comprend la sélection de la valeur de modèle ML d'orchestration pour au moins l'une parmi la première quantité et la quantité restante (320bii).

8. Procédé selon l'une quelconque des revendications précédentes, comprenant en outre :
le calcul (374) d'une valeur de récompense pour l'acquisition de données de réseau de communication en fonction d'au moins l'une parmi :

une efficacité temporelle d'acquisition de données de réseau de communication (374a) ;
une efficacité énergétique d'acquisition de données de réseau de communication (374b) ;
un impact sur le réseau de communication de l'acquisition de données de réseau de communication (374c).

9. Procédé selon l'une quelconque des revendications précédentes, comprenant en outre :
l'obtention (376) d'une représentation mise à jour de l'état d'acquisition de données à la suite d'une collecte d'au moins la première quantité de données de réseau de communication et d'une génération de la quantité restante de données de réseau de communication.

10. Procédé selon la revendication 9, lorsqu'elle dépend de la revendication 8, comprenant en outre l'ajout (378) de :

la représentation obtenue de l'état d'acquisition de données pour les données de réseau de communication ;
la représentation mise à jour obtenue de l'état d'acquisition de données pour les données de réseau de communication ;
au moins l'une parmi la première quantité et la quantité restante des données de réseau de communication ; et
la valeur de récompense calculée,
à une mémoire tampon d'expérience pour le modèle ML d'orchestration.

11. Procédé selon la revendication 10, comprenant en outre, au cours d'une phase d'apprentissage :
l'utilisation (380) du contenu de la mémoire tampon d'expérience pour mettre à jour des paramètres du modèle ML d'orchestration de sorte que le modèle ML d'orchestration mappe une représentation d'un état d'acquisition de données avec une première quantité ou une quantité restante de données de réseau de communication qui génèrent une valeur de récompense maximale.

12. Procédé selon l'une quelconque des revendications précédentes, dans lequel le fait d'amener au moins la première quantité des données de réseau de communication à être collectées depuis des sources des données de réseau de communication comprend :

l'identification (330a) de caractéristiques des données de réseau de communication qui sont soumises à des exigences de respect de la vie privée ; et
pour des caractéristiques de données identifiées :
le fait d'amener (330b) des valeurs pour les caractéristiques de données identifiées à être collectées à l'aide d'une technique respectueuse de la vie privée.

13. Produit programme informatique comprenant un support lisible par ordinateur auquel est incorporé un code lisible par ordinateur qui, lorsqu'il est exécuté par un ordinateur ou un processeur, est configuré pour amener l'ordinateur ou le processeur à réaliser un procédé selon l'une quelconque des revendications 1 à 12.

14. Nœud d'orchestration (400) destiné à l'orchestration d'acquisition d'une quantité de données de réseau de communication pour entraîner un modèle d'apprentissage automatique, ML, cible destiné à être utilisé par un nœud de réseau de communication, le nœud d'orchestration comprenant une circuiterie de traitement (402) configurée pour amener le nœud d'orchestration à :

obtenir une représentation d'un état d'acquisition de données pour les données de réseau de communication ;
utiliser un modèle ML d'orchestration pour mapper la représentation de l'état d'acquisition de données avec une première quantité des données de réseau de communication à collecter depuis des sources des données de réseau de communication, et une quantité restante des données de réseau de communication à générer à l'aide d'un modèle génératif ;
amener au moins la première quantité des données de réseau de communication à être collectées depuis des sources des données de réseau de communication ;
lorsque les données de réseau de communication collectées remplissent un critère de disponibilité pour l'entraînement d'un modèle génératif, amener un modèle génératif pour les données de réseau de communication à être entraîné à l'aide des données de réseau de communication collectées ;

amener la quantité restante des données de réseau de communication à être générées à l'aide du modèle génératif entraîné ; et

amener la quantité de données de réseau de communication, comprenant la première quantité de données collectées et la quantité restante de données générées, à être fournies au nœud de réseau de communication pour l'entraînement du modèle ML cible ;

dans lequel une représentation d'un état d'acquisition de données pour les données de réseau de communication comprend :

un nombre de modèles ML cibles à entraîner à l'aide des données de réseau de communication ;

un coût de ressources de collecte des données de réseau de communication depuis des sources de données ; et

un coût de ressources de génération des données de réseau de communication.

15. Nœud **d'orchestration** selon la revendication 14, dans lequel la circuiterie de traitement est en outre configurée pour amener le nœud d'orchestration à réaliser les étapes selon l'une quelconque des revendications 2 à 12.

**Devices data sources**

**Capabilities**:
battery power, memory, processing
or computational capacity
**Radio data**:
signal quality meas., interference,
time-of-arrival, angle-of-arrival
**Sensor**:
accelerometers, pressure sensors,
light sensors, etc.
**Physical environment**:
cameras, lidars, GNSS

e.g. mobility pred.

UE-augmentation data

e.g. QoS pred.

RAN
augmentation
data

e.g. load pred.

Fig. 1

Fig. 2

Fig. 3a

A

306 — Receive request from request management function

310 — Obtain a representation of a data acquisition state for the data

See Figure 3e

320 — Use an orchestration ML model to map the representation of the data acquisition state to a first amount of the data (to be collected), and a remaining amount of the data (to be generated)

See Figure 3f

330 — Cause at least the first amount of the data to be collected from sources of the communication network data (select sources for the communication network data according to a criterion)

330a — Identify features of the communication network data that are subject to privacy requirements

330b — Cause values for the identified data features to be collected using a privacy aware technique

340 — Generative availability criterion?

No

Yes

340a — Threshold value of a function of parameters describing the collected communication network data

To B

Fig. 3b

B
↓

350 — Cause a generative model for the communication network data to be trained using the collected communication network data

360 — Cause the remaining amount of the data to be generated using the trained generative model

370 — Cause the data, comprising the first amount of collected data and the remaining amount of generated data, to be provided to the communication network node for training of the target ML model

372 — Provide the data to a request management function of the orchestration node, for provision to other communication network nodes

374 — Calculate a reward value for the communication network data acquisition as a function of at least one of:

Time efficiency of data acquisition — 374a

Energy efficiency of data acquisition — 374b

Communication network impact of data acquisition — 374c

↓
To C

Fig. 3c

EP 4 454 235 B1

376 — Obtain an updated representation of the data acquisition state following collection of at least the first amount of communication network data and generation of the remaining amount of communication network data

378 — Add the original and updated representations, first and/or remaining amounts of the data, and the calculated reward value to an experience buffer for the orchestration ML model

380 — Use the contents of the experience buffer to update parameters of the orchestration ML model such that the orchestration ML model will map a representation of a data acquisition state to a first or remaining amount of a data that will generate maximum reward value

382 — Obtain a performance measure for the target ML model following training with the provided dataset

Fig. 3d

EP 4 454 235 B1

| | |
|---|---|
| | Number of data sources available to provide the communication network data ⎤ 310bi |
| 310b — Cost of resources for collection of the communication network data | Expected volume of the communication network data in the quantity of data ⎤ 310bii |
| | Communication network resources available to each source of the communication network data for provision of the data ⎤ 310biii |
| | Priority of the task of acquiring the communication network data ⎤ 310biv |
| 310c — Cost of resources for generating the communication network data | Expected volume of the communication network data in the quantity of data ⎤ 310ci |
| | Computational and memory resources available for running a generative model to generate the communication network data ⎤ 310cii |
| | Priority of the task of acquiring the communication network data ⎤ 310ciii |

Fig. 3e

320a — Input the obtained representation of the data acquisition state to the orchestration ML model

320ai — Orchestration ML model processes the representation in accordance with its parameters, and outputs an orchestration ML model value for at least one of the first or remaining amounts of the data

320b — Select values for the first and remaining amounts of the data based on the orchestration ML model value output by the orchestration ML model

320bi — Learning phase: use an optimization process based on the output of the orchestration ML model

320bii — Exploitation phase: select the output of the orchestration ML model

Fig. 3f

400

Orchestration Node

402

Processor

404

Memory

450

Computer Program

406

Interfaces

Fig. 4

500

Orchestration Node

510

Data Acquisition Orchestration Function

520

Interfaces

Fig. 5

Fig. 6A

Fig. 6B

Fig. 7A

EP 4 454 235 B1

```
13 synthetic_data <- generate_data(a)
14 synthetic_data
15 calculate_reward()
16 observe_state()
17 s1'<-data_source_state
18 observe_state()
19 s2'<-data_generator_state
20 s'<s1,s2>
21 append(s, s', r, a)
```

Every X Episode In K
```
22 sample(m, experience_buffer)
23 train_dqn()
```

Operation

loop [Every T amount of time, e.g., T= 60 min]
```
24 observe_state()
25 s1'<-data_source_ state
26 observe_state()
```

Fig. 7B

27 s2<-data_generator_state

28 s<(s1,s2)

29 a,b=100-a<-predict_action(s)

30 real_data <- collect_data(b, privacy_technique)

31 rdloa <- calculate_rdloa(real_data)

loop [rdloa < t and round(b)!=1:]

32 real_data <- collect_data(b=b/2, privacy_technique)

33 train_model(real_data)

34 synthetic_data <- generate_data(a)

35 synthetic_data

| data_catalogue_orchestrator | | data_consumer | data_catalogue | data_source | data_generator |

Fig. 7C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021201208 A1